# FASCICULE DE BREVET EUROPEEN

(11) **EP 3 313 681 B1**
(45) Date de publication et mention de la délivrance du brevet: **07.10.2020**
(21) Numéro de dépôt: 16728878.6
(22) Date de dépôt: 01.06.2016
(51) Int. Cl.: B60K 11/08

(54) **DISPOSITIF D'OBTURATION D'ENTRÉE D'AIR DE FACE AVANT DE VÉHICULE AUTOMOBILE**
VORRICHTUNG ZUM ABDICHTEN EINES FRONTLUFTEINLASSES EINES KRAFTFAHRZEUGS
DEVICE FOR SEALING A FRONT-END AIR INTAKE OF A MOTOR VEHICLE

(30) Priorité: 26.06.2015 FR 1555917
(43) Date de publication de la demande: 02.05.2018
(73) Titulaire: Valeo Systemes Thermiques, 78321 Le Mesnil-Saint-Denis (FR)
(72) Inventeur: VACCA, Frédéric, 78910 Behoust (FR); THULLIER, Christophe, 78180 Montigny-le-bretonneux (FR)
(74) Mandataire: Tran, Chi-Hai
(86) Numéro de dépôt international: PCT/EP2016/062424
(87) Numéro de publication internationale: WO 2016/206937

(56) Documents cités:
- EP-A1- 2 583 851
- WO-A1-2014/064081
- DE-B3-102013 225 629
- US-A- 1 817 398
- US-A1- 2007 227 794
- US-A1- 2014 288 760

## Description

La présente invention concerne les dispositifs d'obturation et plus précisément un dispositif d'obturation d'entrée d'air de face avant de véhicule automobile.

Les faces avant de véhicules automobiles sont généralement composées de deux entrées d'air principales dites voie haute et voie basse séparées par une poutre pare-choc. Derrière cette poutre pare-choc sont généralement placés les échangeurs de chaleur du véhicule automobile, comme par exemple celui utilisé pour la climatisation de l'habitacle ou encore celui utilisé pour le refroidissement du moteur. Les documents US2014/288760, EP2583851 et DE102013225629 décrivent des dispositifs d'obturation pour entrée d'air de face avant de véhicule automobile, comprenant : un cadre support dans lequel est installé au moins un volet pivotant autour d'un axe de pivotement horizontal entre une position d'obturation et une position d'ouverture, au moins un élément de commande pilotant le positionnement du ou des volets, la partie inférieure du cadre support et l'extrémité inférieure du volet situé le plus bas lorsque ledit volet est en position d'obturation sont séparées par un espace.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur et ainsi d'optimiser l'efficacité de ces échangeurs de chaleur en fonction des besoins. De plus, à grande vitesse, les volets en position d'obturation permettent de diminuer le coefficient de traînée du véhicule et ainsi d'améliorer son aérodynamisme.

Généralement, le dispositif permettant le passage d'une position d'obturation à une position d'ouverture des volets comporte un actionneur qui peut être mécanique, électrique ou encore pneumatique, faisant pivoter les volets en synchronisme au moyen d'une bielle de pivotement.

Dans des conditions hivernales ou froide et humide, lorsque le véhicule est à l'arrêt, de l'eau peut couler le long des volets et s'accumuler au niveau de la partie inférieure du cadre support. Cette eau peut geler, par exemple lors d'un stationnement, et ainsi bloquer les volets notamment par accumulation du gel empêchant ainsi leur pivotement. Ce même phénomène de gel peut également avoir lieu entre les volets eux mêmes ce qui peut également les immobiliser

Afin que les volet ne soient pas bloqués par ce gel, il est connu de doter le dispositif d'obturation d'un moyen de commande déployant suffisamment de force pour briser le gel formé ainsi que des volets suffisamment résistant.

Cependant cela oblige à augmenter la taille du moyen de commande afin qu'il soit suffisamment puissant et résistant et cela augmente de fait son coût. Il en est de même pour les volets qui doivent être plus résistant et sont donc plus coûteux.

Un des buts de la présente invention est donc de remédier au moins partiellement aux inconvénients de l'art antérieur et de proposer un dispositif d'obturation amélioré.

La présente invention concerne donc un dispositif d'obturation selon la revendication 1.

Cet espace de part sa hauteur, permet une réception de l'eau pouvant ruisseler hors du dispositif à l'arrêt du véhicule automobile. Cette eau ne s'accumule pas au niveau du volet situé le plus bas si bien que si elle gèle, elle ne bloque pas ledit volet. Il est ainsi possible de fabriquer un dispositif d'obturation avec un élément de commande de plus faible puissance et résistance et donc moins coûteux.

Selon un aspect de l'invention, ledit dispositif d'obturation comporte une paroi fixe, ladite paroi fixe étant placée au niveau de l'espace entre la partie inférieure du cadre support et l'extrémité inférieure du volet situé le plus bas.

Selon un autre aspect de l'invention, la paroi fixe est sensiblement parallèle au volet situé le plus lorsque ledit volet est en position d'obturation.

Selon un autre aspect de l'invention, la hauteur de la paroi fixe est comprise entre 10 et 15mm.

Selon un autre aspect de l'invention, la paroi fixe forme une pièce monobloc avec la partie inférieure du cadre support.

Selon un autre aspect de l'invention, la partie inférieure du cadre support a une forme générale en « L ».

Selon l'invention, à l'arrêt du véhicule automobile, le ou les volets se positionnent dans une position d'arrêt prédéterminé où le ou lesdits volets sont décalés d'un angle compris entre 1 et 40° par rapport à leur position d'obturation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective et en coupe du dispositif d'obturation de la figure 1,
- la figure 3 montre une représentation schématique en perspective d'un élément de commande
- la figure 4 montre une représentation schématique de côté et en coupe d'un dispositif d'obturation.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

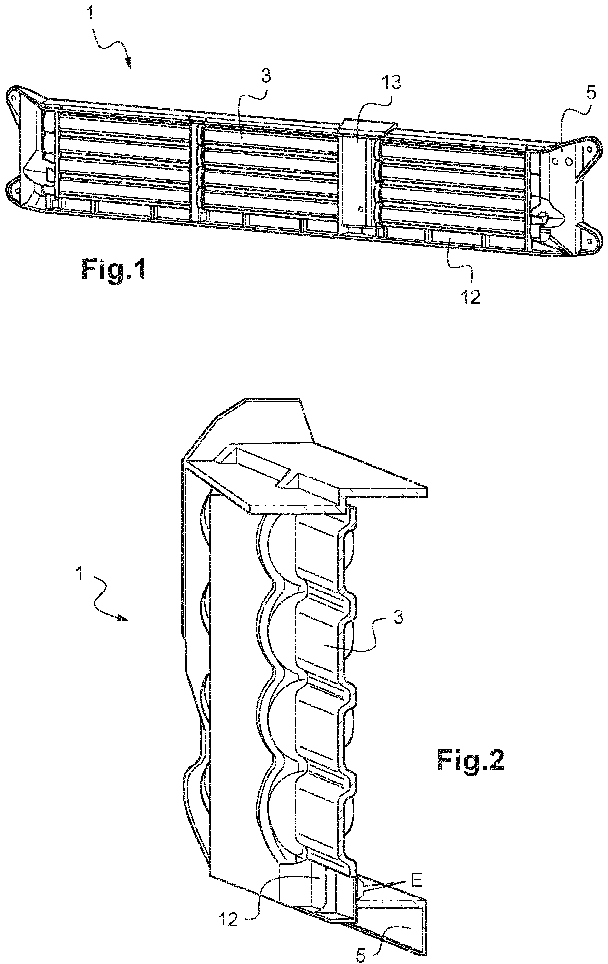

La figure 1 montre une représentation schématique en perspective d'un dispositif d'obturation en position d'obturation. Cette figure 1 montre plus exactement la face externe dudit dispositif d'obturation 1, c'est-à-dire la face dirigée vers l'extérieur du véhicule automobile.

Ledit dispositif d'obturation 1 comporte un cadre support 5 sur lequel est installé au moins un volet 3. Lorsqu'il y a une pluralité de volets 3, ces derniers forment des rangs de volets 3 parallèles entre eux. A l'une des extrémités du ou des volets 3 est placé un élément de commande 13 permettant la rotation du ou des volets 3 entre une position d'ouverture, où les volets 3 sont disposés de sorte qu'un flux d'air puisse traverser le dispositif d'obturation 1, notamment à l'intérieur du cadre support 5, et une position d'obturation illustrée aux figures 1 et 2, où les volets sont agencés de sorte qu'un flux d'air ne puisse pas traverser le dispositif d'obturation 1.

Comme illustré sur la figure 1, il est possible d'avoir un dispositif d'obturation 1 d'une entrée d'air de face avant de véhicule automobile comportant au moins deux ensembles de volets 3 s'étendant sur toute la largeur du cadre support 5. Deux ensembles de volets 3 peuvent ainsi être séparés par un élément de commande 13 afin d'assurer leur rotation synchrone.

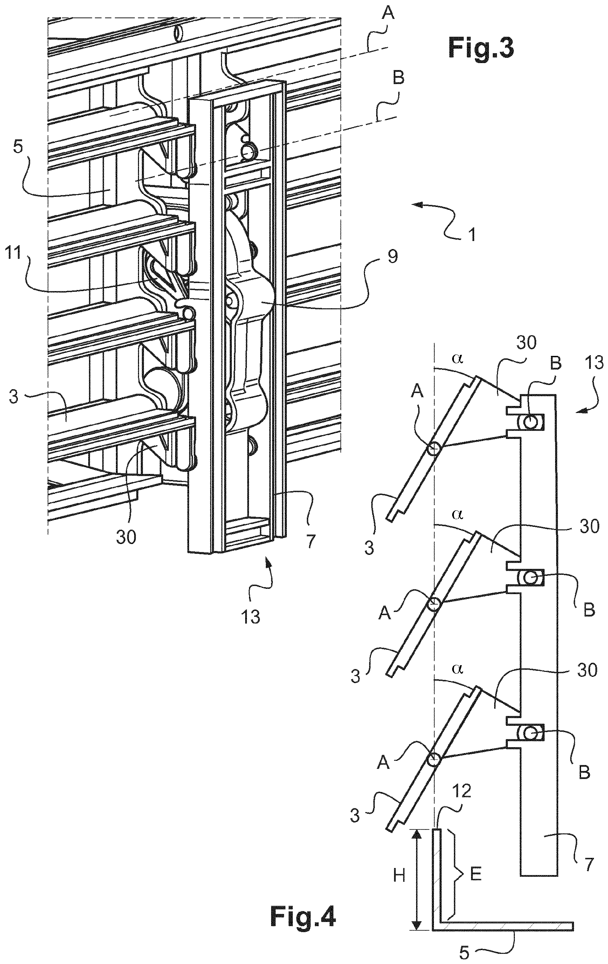

Comme le montre la figure 3, l'ensemble de commande 13 comporte notamment une bielle 7 de pivotement reliée aux volets 3 par une nervure 30 perpendiculaire auxdits volet 3, généralement venant de matière avec lesdits volets 3 et portant un axe de liaison B.

L'élément de commande 13 comporte également un actionneur 9. L'actionneur 9 peut être électrique, comme par exemple un moteur électrique ou encore pneumatique, comme par exemple un vérin. Ledit actionneur 9 applique à la bielle 7 de pivotement un mouvement de translation vers le haut ou vers le bas, ici au moyen d'un levier 11.

Les volets 3 peuvent pivoter autour d'un axe de pivotement A défini par leur liaison avec le cadre support 5. L'axe de liaison B entre les volets 3 et la bielle 7, étant excentré par rapport à l'axe de pivotement A, un déplacement vers le haut ou vers le bas de la bielle 7, sous l'action de l'actionneur 9, entraîne le pivotement des volets 3 autour de l'axe de pivotement A et donc le passage desdits volets 3 d'une position à une autre

Tous les volets 3 étant reliés à la même bielle 7 de pivotement, le passage d'une position d'ouverture à une position d'obturation est synchrone pour tous lesdits volets 3. Il est également possible que l'ensemble ne comporte qu'un seul volet 3.

Comme illustré sur les figures 1, 2 et 4, ledit dispositif d'obturation 1 comporte, entre la partie inférieure du cadre support 5 et l'extrémité inférieure du volet 3 situé le plus bas, un espace E. Cet espace E permet la réception et/ou l'évacuation de l'eau pouvant ruisseler à l'arrêt du véhicule automobile. Cette eau ne stagne pas au niveau du volet 3 situé le plus bas et donc si elle gèle, elle ne bloque pas ledit volet 3. Il est ainsi possible de fabriquer un dispositif d'obturation 1 avec un élément de commande 13 de plus faible puissance et résistance et donc moins coûteux.

L'espace E entre la partie inférieure du cadre support 5 et l'extrémité inférieure du volet 3 situé le plus bas peut notamment être comblé par une paroi fixe 12. Cette paroi fixe 12 est parallèle au volet 3 situé le plus bas lorsque ledit volet 3 est en position d'obturation et ladite paroi fixe 12 a une hauteur H d'au moins 10mm. Bien entendu l'espace E présente une même hauteur, autrement dit, la partie inférieure du cadre support et l'extrémité inférieure du volet situé le plus bas, lorsque ledit volet est en position d'obturation, sont séparées par un espace d'au moins 10 mm.

De préférence, la hauteur H de la paroi fixe 12 est comprise entre 10 et 15mm. Cela permet la réception de l'eau tout en conservant une certaine compacité du cadre support 5 du dispositif d'obturation 1.

Comme illustré sur les figures 2 et 4 en coupe, la partie inférieure du cadre support 5 peut avoir une forme générale en « L » afin d'appliquer la paroi fixe 12 entre la partie inférieure du cadre support 5 et l'extrémité inférieure du volet 3 situé le plus bas, lorsque ledit volet 3 est en position d'obturation.

La paroi fixe 12 peut former une pièce monobloc avec la partie inférieure du cadre support 5 et ainsi être fabriquée en même temps que le cadre support 5.

Selon l'invention à l'arrêt du véhicule automobile, le ou les volets 3 se positionnent dans une position d'arrêt prédéterminé. Afin que de l'eau ne puisse stagner et geler entre les volets 3 dans cette position d'arrêt prédéterminé, les volets 3 sont décalés d'un angle α compris entre 1 et 40° par rapport à leur position d'obturation.

Cette inclinaison empêche l'eau de stagner entre les volets 3 et si elle gèle, empêche que les volets ne soient collés entre eux. Il est ainsi possible d'utiliser des volets 3 moins résistant et plus légers, et donc moins coûteux pour la fabrication du dispositif d'obturation 1.

Ainsi, on voit bien que de part la présence de l'espace E entre la partie inférieure du cadre support 5 et l'extrémité inférieure du volet 3 situé le plus bas, lorsque ledit volet 3 est en position d'obturation, mais également du fait qu'en position d'arrêt prédéterminé, les volets 3 peuvent avoir un angle α compris entre 1 et 10° par rapport à leur position d'obturation, le dispositif d'obturation 1 selon l'invention empêche que les volets 3 soient bloqués par du gel et donc il est possible de fabriquer un dispositif d'obturation 1 à moindre coûts car ses exigences en terme de solidité et de puissance sont moindres.

## Revendications

1. Dispositif d'obturation (1) pour entrée d'air de face avant de véhicule automobile, comprenant :
▪ un cadre support (5) dans lequel est installé au moins un volet pivotant (3) autour d'un axe de pivotement horizontal (A) entre une position d'obturation et une position d'ouverture,
▪ au moins un élément de commande (13) pilotant le positionnement du ou des volets (3),
la partie inférieure du cadre support (5) et l'extrémité inférieure du volet (3) situé le plus bas lorsque ledit volet (3) est en position d'obturation étant
séparées par un espace (E), cet espace (E) de part sa hauteur permettant une réception et/ou une évacuation de l'eau pouvant ruisseler hors dudit dispositif, et à l'arrêt du véhicule automobile, le ou les volets (3) se positionnant
dans une position d'arrêt prédéterminé où le ou lesdits volets (3) sont décalés d'un angle (α) compris entre 1 et 40° par rapport à leur position d'obturation.

2. Dispositif d'obturation selon la revendication 1, ledit dispositif d'obturation (1) comportant une paroi fixe (12), ladite paroi fixe (12) étant placée au niveau de l'espace (E) entre la partie inférieure du cadre support (5) et l'extrémité inférieure du volet (3) situé le plus bas.

3. Dispositif d'obturation selon la revendication 2, la paroi fixe (12) étant sensiblement parallèle au volet (3) situé le plus bas lorsque ledit volet (3) est en position d'obturation.

4. Dispositif d'obturation (1) selon l'une des revendications 2 ou 3, la hauteur (H) de la paroi fixe (12) étant comprise entre 10 et 15mm.

5. Dispositif d'obturation (1) selon l'une des revendications 2 à 4, la paroi fixe (12) formant une pièce monobloc avec la partie inférieure du cadre support (5).

6. Dispositif d'obturation (1) selon l'une des revendications précédentes, la partie inférieure du cadre support (5) ayant une forme générale en « L ».

## Patentansprüche

1. Vorrichtung zum Verschließen (1) für einen Lufteinlass an der Vorderseite eines Kraftfahrzeugs, welche umfasst:
• einen Stützrahmen (5), in welchen wenigstens eine Klappe (3) eingebaut ist, die um eine horizontale Schwenkachse (A) zwischen einer Verschlussposition und einer Öffnungsposition schwenkbar ist,
• wenigstens ein Steuerelement (13), das die Positionierung der Klappe oder der Klappen (3) steuert,
wobei der untere Teil des Stützrahmens (5) und das untere Ende der Klappe (3), das sich am weitesten unten befindet, wenn sich die Klappe (3) in der Verschlussposition befindet, durch einen Zwischenraum (E) getrennt sind, wobei dieser Zwischenraum (E) aufgrund seiner Höhe eine Aufnahme und/oder ein Abfließen des Wassers ermöglicht, das aus der Vorrichtung herausrieseln kann, und wobei beim Anhalten des Kraftfahrzeugs die Klappe oder die Klappen (3) in eine vorbestimmte Stillstandsposition gestellt werden, in der die Klappe oder die Klappen (3) um einen Winkel (α) zwischen 1 und 40° bezüglich ihrer Verschlussposition versetzt sind.

2. Vorrichtung zum Verschließen nach Anspruch 1, wobei die Vorrichtung zum Verschließen (1) eine feste Wand (12) aufweist, wobei die feste Wand (12) am Zwischenraum (E) zwischen dem unteren Teil des Stützrahmens (5) und dem unteren Ende der Klappe (3), das sich am weitesten unten befindet, angeordnet ist.

3. Vorrichtung zum Verschließen nach Anspruch 2, wobei die feste Wand (12) im Wesentlichen parallel zu der am weitesten unten befindlichen Klappe (3) ist, wenn sich diese Klappe (3) in der Verschlussposition befindet.

4. Vorrichtung zum Verschließen (1) nach einem der Ansprüche 2 oder 3, wobei die Höhe (H) der festen Wand (12) zwischen 10 und 15 mm beträgt.

5. Vorrichtung zum Verschließen (1) nach einem der Ansprüche 2 bis 4, wobei die feste Wand (12) mit dem unteren Teil des Stützrahmens (5) ein einstückiges Teil bildet.

6. Vorrichtung zum Verschließen (1) nach einem der vorhergehenden Ansprüche, wobei der untere Teil des Stützrahmens (5) im Wesentlichen eine L-Form aufweist.

## Claims

1. Sealing device (1) for an air inlet of a front end of a motor vehicle, comprising:
▪ a support frame (5) in which there is installed at least one flap (3) that can pivot about a horizontal pivot axis (A) between a sealing position and an opening position,
▪ at least one control element (13) controlling the position of the flap or flaps (3),
the lower part of the support frame (5) and the lower end of the flap (3) that is lowest when said flap (3) is in the sealing position being separated by a space (E), this space (E) by virtue of its height making it possible to receive and/or evacuate water that can run out of said device, and when the motor vehicle is stopped, the flap or flaps (3) being positioned in a predetermined stopped position where the flap or flaps (3) are offset by an angle (α) of between 1 and 40° with respect to their sealing position.

2. Sealing device according to Claim 1, said sealing device (1) comprising a fixed wall (12), said fixed wall (12) being positioned at the level of the space (E) between the lower part of the support frame (5) and the lower end of the lowest flap (3).

3. Sealing device according to Claim 2, the fixed wall (12) being essentially parallel to the flap (3) that is lowest when said flap (3) is in the sealing position.

4. Sealing device (1) according to either of Claims 2 and 3, the height (H) of the fixed wall (12) being between 10 and 15 mm.

5. Sealing device (1) according to one of Claims 2 to 4, the fixed wall (12) forming a monolithic part with the lower part of the support frame (5).

6. Sealing device (1) according to one of the preceding claims, the lower part of the support frame (5) being generally L-shaped.
